# EUROPÄISCHE PATENTSCHRIFT

(11) **EP 1 277 558 B1**
(45) Veröffentlichungstag und Bekanntmachung des Hinweises auf die Patenterteilung: **15.08.2007**
(21) Anmeldenummer: 02012788.2
(22) Anmeldetag: 10.06.2002
(51) Int. Cl.: B29C 45/17

(54) **Verfahren und Vorrichtung zum Erzeugen der Andruckkraft eines Spritzaggregates einer Kunststoffverarbeitungsmaschine**
Method and apparatus for producing the touching force of an injection unit of a plastic moulding machine
Procédé et dispositif pour engendrer la force de contact d'une unité d'injection d'une machine de moulage de matière plastique

(30) Priorität: 19.07.2001 DE 10135125
(43) Veröffentlichungstag der Anmeldung: 22.01.2003
(73) Patentinhaber: Adcuram Maschinenbauholding GmbH, 80333 München (DE)
(72) Erfinder: Schaffer, Werner, Ing., 7022 Loipersbach (AT); Wolf, Dietrich, Dipl.-Ing. FH, 2486 Pottendorf (AT)
(74) Vertreter: Gosdin, Michael

(56) Entgegenhaltungen:
- PATENT ABSTRACTS OF JAPAN vol. 1997, no. 04, 30. April 1997 (1997-04-30) -& JP 08 318546 A (JAPAN STEEL WORKS LTD:THE), 3. Dezember 1996 (1996-12-03) -& DATABASE WPI Week 200045 Derwent Publications Ltd., London, GB; AN 1997-072522 XP002219338 & JP 08 318546 A
- PATENT ABSTRACTS OF JAPAN vol. 2000, no. 8, 6. Oktober 2000 (2000-10-06) -& JP 2000 141434 A (MEIKI CO LTD), 23. Mai 2000 (2000-05-23)

## Beschreibung

Die Erfindung betrifft ein Verfahren zum Erzeugen von Andruckkraft eines Spritzaggregates einer Spritzgießmaschine an ein Werkzeug, das die Schritte umfasst: a) Betätigen einer Linearantriebseinheit, um eine Spritzvorrichtung an einem Werkzeug zur Anlage zu bringen, wobei während der axialen Verschiebung der Spritzvorrichtung eine Arbeitszylindereinheit über einen Speicher mit Fluid versorgt wird, bis die gewünschte Anlageposition am Werkzeug erreicht ist, sowie eine Vorrichtung zum Verfahren eines Spritzaggregates einer Spritzgießmaschine, die mindestens eine Linearantriebseinheit, ein Hydraulikelement, eine Verbindungseinheit, einen Speicher, ein Sperrelement und eine Arbeitszylindereinheit umfasst.

Verfahren und Vorrichtungen zum Bewegen von Spritzaggregaten sind im allgemeinen bekannt. Das in der Spritzeinheit plastifizierte Kunststoffgranulat wird, nachdem es die zum Spritzen notwendige Fließfähigkeit und dafür notwendige Temperatur erreicht hat, mit hoher Geschwindigkeit und aus diesem Grund auch mit hohem Druck in das geschlossene Werkzeug gespritzt. Es ist daher erforderlich, die Düse, ein Teil der Spritzeinheit, fest an das Werkzeug anzudrücken, damit die plastifizierte Kunststoffmasse nicht zwischen Düse und Werkzeug entweichen kann.

Vorrichtungen zum Erzeugen von Andruckkraft bei Spritzgießmaschinen sind aus der JP-A-08318546 und der JP-A-2000141434 bekannt.

Um die Anpresskräfte bei einer hydraulischen Presse zu erhöhen, schlägt die DE 295 04 297 U vor, einen Kolben kleineren Durchmessers in den mit einem Fluid gefüllten Hohlraum eines größeren Arbeitszylinders einzutauchen. Das auf diese Weise verdrängte Fluid erhöht den Druck im Arbeitszylinder und folglich die durch den Arbeitszylinder erzeugte Anpresskraft.

**Aufgabe** der Erfindung ist es, ein Verfahren und eine Vorrichtung anzubieten, mit der die erforderliche Anpresskraft einer Düse eines Spritzaggregates an ein Werkzeug und die Bewegung des Spritzaggregates über ein und den selben Linearantrieb zu ermöglichen.

Die **Lösung** der Aufgabe ist dadurch gekennzeichnet, dass nach Erreichen der Anlageposition am Werkzeug ein Sperrelement geschlossen und die Verbindung innerhalb einer Verbindungseinheit geöffnet wird, und b) die eine Linearantriebseinheit weiter betätigt wird, c) ein Verdrängerkolben relativ zum Hydraulikelement verschoben wird, und d) über eine fluidische Verbindung im Hydraulikelement erhöhter Druck in der Arbeitszylindereinheit erzeugt wird, um den Anpressdruck des Spritzaggregates an das Werkzeug zu erhöhen. Durch diese weiteren Schritte des erfindungsgemäßen Verfahrens wird im Arbeitszylinder ein Hochdruck erzeugt und folglich die erforderliche Düsenanlagekraft erreicht.

Fortbildungsgemäß ist vorgesehen, das Schließen des Sperrelementes und das Öffnen der Verbindung zwischen einem Verbindungselement und einem Stützelement der Verbindungseinheit derart zu steuern oder zu regeln, dass die Bewegung der einen Linearantriebseinheit zwischen Verfahrensschritt a) und Verfahrensschritt b) stetig ist.

Bei der vorgeschlagenen Vorrichtung ist erfindungsgemäß vorgesehen, dass das Spritzaggregat über die Verbindungseinheit mit der Linearantriebseinheit verbunden ist und ein Verdrängerkolben mittels der Linearantriebseinheit relativ zum Hydraulikelement verschiebbar ist, um bei geöffneter Verbindungseinheit und geschlossenem Sperrelement den Druck in der Arbeitszylindereinheit zu erhöhen. Durch diese vorgeschlagene Ausführungsform der Vorrichtung ist es möglich, im Arbeitszylinder über ein und den selben Linearantrieb einen Hochdruck zu erzeugen und die erforderliche Düsenanlagekraft zu erreichen.

Es ist vorgesehen, die Verbindung zwischen dem Spritzaggregat und der Linearantriebseinheit form- und/oder kraftschlüssig auszuführen. Das Sperrelement kann als ringförmiges Dichtelement ausgeführt werden, das über den Verdrängerkolben aktivierbar ist. Das Sperrelement kann aber auch ein elektrisch oder mechanisch betätigbares Ventil sein.

Als Verbindungselement wird ein Permanent- oder Elektromagnet vorgeschlagen, es ist aber auch denkbar, das Verbindungselement als Feder oder Zylinder auszuführen. Die erforderliche Haltekraft wird dann ermittelt und entsprechend ausgelegt oder bei einem Elektromagneten über die Maschinensteuerung aktiviert bzw. gelöst.

Die bevorzugte Ausführungsform ist die Linearantriebseinheit aus einem Elektromotor, einem Getriebe und einem Schraubtrieb zu bilden.

Weiterbildungsgemäß ist vorgesehen, die Linearantriebseinheit aus einem Elektromotor, einem Getriebe mit angeordnetem Ritzel und einer Zahnstange zu bilden. Eine weitere Ausführungsvariante wäre, die Linearantriebseinheit als elektrischen Linearantrieb herzustellen.

In den Zeichnungen sind zwei Ausführungsbeispiele dargestellt.
- Fig. 1: zeigt das am Werkzeug anliegende Spritzaggregat vor der Hochdruckphase, und
- Fig. 2: zeigt Figur 1 mit einer anderen Position der Verbindungseinheit

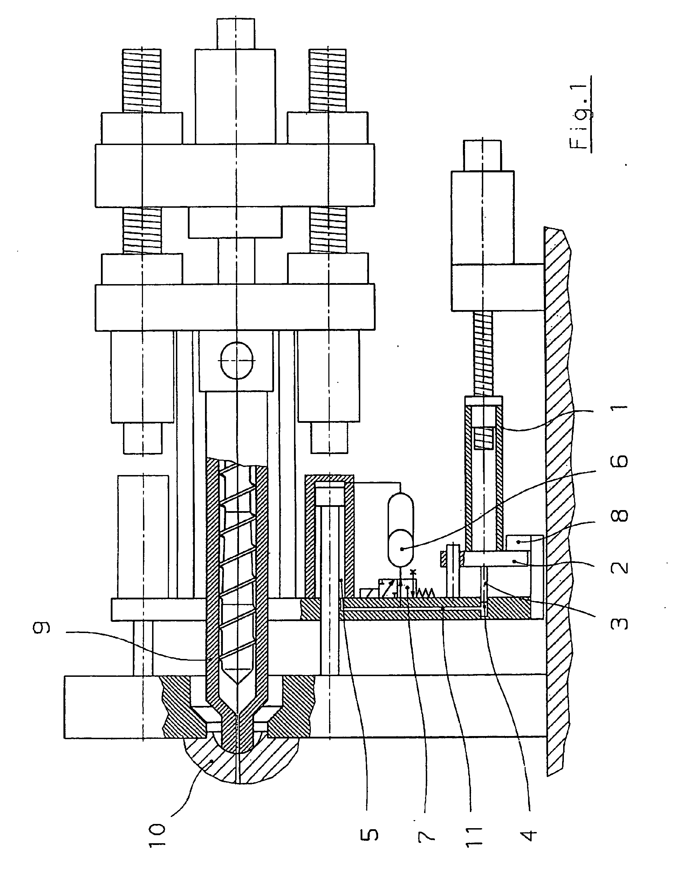

In Figur 1 liegt das Spritzaggregat 9 am Werkzeug 10 an. Das Spritzaggregat 9 steht über die Verbindungseinheit 2, 8 mit der Linearantriebseinheit 1 form- und kraftschlüssig in Verbindung und wurde über diese zur Anlage am Werkzeug 10 gebracht. Bei dieser Verfahrbewegung wurde die Arbeitszylindereinheit 5, das Sperrelement 7 und das Hydraulikelement 4 mit verschoben, da eine kraftschlüssige Verbindung zwischen dem Stützelement 2 und dem Verbindungselement 8 vorliegt. Eine formschlüssige Verbindung liegt vor, wenn das Spritzaggregat 9 vom Werkzeug 10 abgehoben wird, also die Linearantriebseinheit 1 in die entgegengesetzte Richtung dreht. Hier wird die Arbeitszylindereinheit 5, das Sperrelement 7 und das Hydraulikelement 4 mit gezogen.

Sobald das Spritzaggregat 9 die dargestellte Position erreicht hat, wird das Sperrelement 7 geschlossen und die Verbindung in der Verbindungseinheit 2, 8 geöffnet. D.h. das Verbindungselement 8, hier ein Elektromagnet, wird über die Maschinensteuerung stromlos geschaltet und gibt das Stützelement 2 frei. Die Linearantriebseinheit 1 wird weiter betätigt und verschiebt den Verdrängerkolben 3 relativ zum Hydraulikelement 4. Durch diese Relativbewegung wird ein Fluid, beispielsweise Hydrauliköl, über die fluidische Verbindung 11 im Hydraulikelement 4 verdrängt. Da die fluidische Verbindung 11 bis in die Arbeitszylindereinheit 5 reicht, wird der Druck in diesem erhöht und folglich die Anpresskraft des Spritzaggregates 9 an das Werkzeug 10.

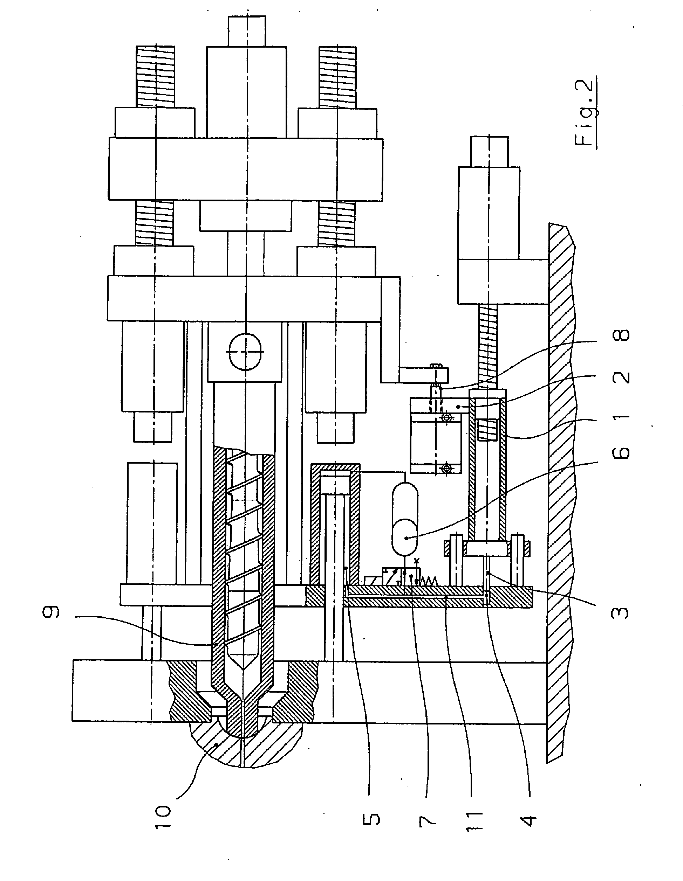

Figur 2 unterscheidet sich zur Figur 1 dadurch, dass die Verbindungseinheit 2, 8 nicht am Kopf der Linearantriebseinheit 1 angeordnet ist und über das Hydraulikelement 4 mit dem Spritzaggregat 9 in Verbindung steht, sondern hier ist das Stützelement 2 an der Zylinderwandung des Schraubtriebes der Linearantriebseinheit 1 angebracht und das Verbindungselement 8 an einem Träger des Spritzaggregates 9. Als Verbindungselement 8 ist hier ein Zylinder gewählt, der nach Erreichen der Anlageposition des Spritzaggregates 9 am Werkzeug 10 seine Haltekraft frei gibt und ein Verfahren des Stützelementes 2 relativ zum Spritzaggregat 9 ermöglicht.

Mit der vorgeschlagenen Ausführung der Vorrichtung und dem vorgeschlagenen Verfahren wird es ermöglicht, ein Spritzaggregat mit einer Linearantriebseinheit an einem Werkzeug zur Anlage zu bringen und mit der gleichen Linearantriebseinheit die erforderliche Anpresskraft an dieses Werkzeug zu erzeugen.

### Bezugszeichenliste:

- 1: Linearantriebseinheit
- 2: Stützelement
- 3: Verdrängerkolben
- 4: Hydraulikelement
- 5: Arbeitszylindereinheit
- 6: Speicher
- 7: Sperrelement
- 8: Verbindungselement
- 9: Spritzaggregat
- 10: Werkzeug
- 11: fluidische Verbindung

## Patentansprüche

1. Verfahren zum Erzeugen von Andruckkraft eines Spritzaggregates (9) einer Spritzgießmaschine an ein Werkzeug (10), das die Schritte umfasst:
a) Betätigen einer Linearantriebseinheit (1), um eine Spritzvorrichtung an einem Werkzeug zur Anlage zu bringen, wobei während der axialen Verschiebung der Spritzvorrichtung eine Arbeitszylindereinheit (5) über einen Speicher (6) mit Fluid versorgt wird, bis die gewünschte Anlageposition am Werkzeug erreicht ist, **dadurch gekennzeichnet, dass**
nach Erreichen der Anlageposition am Werkzeug ein Sperrelement (7) geschlossen und die Verbindung innerhalb einer Verbindungseinheit (2, 8) geöffnet wird, und
b) die eine Linearantriebseinheit (1) weiter betätigt wird,
c) ein Verdrängerkolben (3) relativ zu einem Hydraulikelement (4) verschoben wird, und
d) über eine fluidische Verbindung (11) im Hydraulikelement (4) erhöhter Druck in der Arbeitszylindereinheit (5) erzeugt wird, um den Anpressdruck des Spritzaggregates (9) an das Werkzeug (10) zu erhöhen.

2. Verfahren nach Anspruch 1, **dadurch gekennzeichnet, dass** das Schließen des Sperrelementes (7) und das Öffnen der Verbindung zwischen einem Verbindungselement (8) und einem Stützelement (2) der Verbindungseinheit (2, 8) derart gesteuert oder geregelt wird, dass die Bewegung der einen Linearantriebseinheit (1) zwischen Verfahrensschritt a) und Verfahrensschritt b) stetig ist.

3. Vorrichtung zum Verfahren eines Spritzaggregates (9) einer Spritzgießmaschine, die
- mindestens eine Linearantriebseinheit (1),
- ein Hydraulikelement (4),
- eine Verbindungseinheit (2, 8)
- einen Speicher (6),
- ein Sperrelement (7) und
- eine Arbeitszylindereinheit (5) umfasst,
**dadurch gekennzeichnet, dass**
das Spritzaggregat (9) über die Verbindungseinheit (2, 8) mit der Linearantriebseinheit (1) verbunden ist und
ein Verdrängerkolben (3) mittels der Linearantriebseinheit (1) relativ zum Hydraulikelement (4) verschiebbar ist, um bei geöffneter Verbindungseinheit (2, 8) und geschlossenem Sperrelement (7) den Druck in der Arbeitszylindereinheit (5) zu erhöhen.

4. Vorrichtung nach Anspruch 3, **dadurch gekennzeichnet, dass** die Verbindung zwischen dem Spritzaggregat (9) und der Linearantriebseinheit (1) form- und/oder kraftschlüssig ist.

5. Vorrichtung nach Anspruch 4, **dadurch gekennzeichnet, dass** das Sperrelement (7) als ein ringförmiges Dichtelement ausgeführt ist, das über den Verdrängerkolben (3) aktivierbar ist.

6. Vorrichtung nach Anspruch 4, **dadurch gekennzeichnet, dass** das Sperrelement (7) ein elektrisch, pneumatisch oder mechanisch betätigbares Ventil ist.

7. Vorrichtung nach mindestens einem der Ansprüche 3 bis 6, **dadurch gekennzeichnet, dass** das Verbindungselement (8) ein Permanent- oder Elektromagnet ist.

8. Vorrichtung nach mindestens einem der Ansprüche 3 bis 6, **dadurch gekennzeichnet, dass** das Verbindungselement (8) eine Feder, ein Zylinder, eine Klinke, ein Rastbolzen oder ein Keilspannmittel ist.

9. Vorrichtung nach einem der Ansprüche 3 bis 8, **dadurch gekennzeichnet, dass** die Linearantriebseinheit (1) einen Elektromotor, ein Getriebe und einen Schraubtrieb umfasst.

10. Vorrichtung nach einem der Ansprüche 3 bis 8, **dadurch gekennzeichnet, dass** die Linearantriebseinheit (1) einen Elektromotor, ein Getriebe mit angeordnetem Ritzel und eine Zahnstange umfasst.

11. Vorrichtung nach einem der Ansprüche 3 bis 8, **dadurch gekennzeichnet, dass** die Linearantriebseinheit (1) ein elektrischer Linearantrieb ist.

## Claims

1. Method for producing the pressing force of an injection unit (9) of an injection-moulding machine against a mould (10), which comprises the steps of:
a) actuating a linear drive unit (1), in order to bring an injection device into contact with a mould, a working cylinder unit (5) being supplied with fluid by means of a reservoir (6) during the axial displacement of the injection device until the desired position in contact with the mould is reached,
**characterized in that**,
after reaching the position in contact with the mould, a shut-off element (7) is closed and the connection within a connecting unit (2, 8) is opened, and
b) the one linear drive unit (1) is further actuated,
c) a displacement piston (3) is displaced in relation to a hydraulic element (4), and
d) increased pressure is produced in the working cylinder unit (5) via a fluidic connection (11) in the hydraulic element (4), in order to increase the pressing pressure of the injection unit (9) against the mould (10).

2. Method according to Claim 1, **characterized in that** the closing of the shut-off element (7) and the opening of the connection between a connecting element (8) and a supporting element (2) of the connecting unit (2, 8) is controlled in an open-loop or closed-loop manner in such a way that the movement of the one linear drive unit (1) is constant between method step a) and method step b).

3. Apparatus for moving an injection unit (9) of an injection-moulding machine, which comprises
- at least one linear drive unit (1),
- a hydraulic element (4),
- a connecting unit (2, 8),
- a reservoir (6),
- a shut-off element (7) and
- a working cylinder unit (5),
**characterized in that**
the injection unit (9) is connected to the linear drive unit (1) via the connecting unit (2, 8) and
a displacement piston (3) can be displaced in relation to the hydraulic element (4) by means of the linear drive unit (1), in order to increase the pressure in the working cylinder unit (5) when the connecting unit (2, 8) is open and the shut-off element (7) is closed.

4. Apparatus according to Claim 3, **characterized in that** the connection between the injection unit (9) and the linear drive unit (1) is positive and/or non-positive.

5. Apparatus according to Claim 4, **characterized in that** the shut-off element (7) is configured as an annular sealing element which can be activated by means of the displacement piston (3).

6. Apparatus according to Claim 4, **characterized in that** the shut-off element (7) is an electrically, pneumatically or mechanically actuable valve.

7. Apparatus according to at least one of Claims 3 to 6, **characterized in that** the connecting element (8) is a permanent magnet or an electromagnet.

8. Apparatus according to at least one of Claims 3 to 6, **characterized in that** the connecting element (8) is a spring, a cylinder, a catch, an indexing bolt or a wedge-type clamping means.

9. Apparatus according to one of Claims 3 to 8, **characterized in that** the linear drive unit (1) comprises an electric motor, a gear mechanism and an inertia drive pinion.

10. Apparatus according to one of Claims 3 to 8, **characterized in that** the linear drive unit (1) comprises an electric motor, a gear mechanism with an arranged pinion and a toothed rack.

11. Apparatus according to one of Claims 3 to 8, **characterized in that** the linear drive unit (1) is an electric linear drive.

## Revendications

1. Procédé pour produire la force de contact d'une unité d'injection (9) d'une machine de moulage par injection sur un outil (10), comprenant les étapes suivantes :
a) actionnement d'une unité d'entraînement linéaire (1) pour amener en appui un dispositif d'injection contre un outil, une unité de cylindre de travail (5) étant alimentée en fluide par le biais d'un réservoir (6) pendant le déplacement axial du dispositif d'injection, jusqu'à ce que la position d'appui souhaitée contre l'outil soit obtenue,
**caractérisé en ce que**,
après l'obtention de la position d'appui contre l'outil, un élément de blocage (7) est fermé et la connexion à l'intérieur d'une unité de connexion (2, 8) est ouverte, et
b) l'unité d'entraînement linéaire (1) est à nouveau actionnée,
c) un piston de déplacement (3) est déplacé par rapport à un élément hydraulique (4) et
d) une pression accrue est produite dans l'unité de cylindre de travail (5) par le biais d'une connexion fluidique (11) dans l'élément hydraulique (4) afin d'augmenter la pression de contact de l'unité d'injection (9) contre l'outil (10).

2. Procédé selon la revendication 1, **caractérisé en ce que** la fermeture de l'élément de blocage (7) et l'ouverture de la connexion entre un élément de connexion (8) et un élément de support (2) de l'unité de connexion (2, 8) sont commandées ou régulées de telle sorte que le mouvement de l'unité d'entraînement linéaire (1) entre l'étape de procédé a) et l'étape de procédé b) soit constant.

3. Dispositif pour déplacer une unité d'injection (9) d'une machine de moulage par injection, comprenant :
- au moins une unité d'entraînement linéaire (1),
- un élément hydraulique (4),
- une unité de connexion (2, 8),
- un réservoir (6),
- un élément de blocage (7), et
- une unité de cylindre de travail (5),
**caractérisé en ce que**
l'unité d'injection (9) est connectée par le biais de l'unité de connexion (2, 8) à l'unité d'entraînement linéaire (1) et
un piston de déplacement (3) peut être déplacé au moyen de l'unité d'entraînement linéaire (1) par rapport à l'élément hydraulique (4) afin d'augmenter la pression dans l'unité de cylindre de travail (5) lorsque l'unité de connexion (2, 8) est ouverte et que l'élément de blocage (7) est fermé.

4. Dispositif selon la revendication 3, **caractérisé en ce que** la connexion entre l'unité d'injection (9) et l'unité d'entraînement linéaire (1) est une connexion par engagement positif ou par force.

5. Dispositif selon la revendication 4, **caractérisé en ce que** l'élément de blocage (7) est réalisé sous la forme d'un élément d'étanchéité annulaire qui peut être activé par le biais du piston de déplacement (3).

6. Dispositif selon la revendication 4, **caractérisé en ce que** l'élément de blocage (7) est une soupape électrique, pneumatique ou mécanique.

7. Dispositif selon au moins l'une quelconque des revendications 3 à 6, **caractérisé en ce que** l'élément de connexion (8) est un aimant permanent ou un électroaimant.

8. Dispositif selon au moins l'une quelconque des revendications 3 à 6, **caractérisé en ce que** l'élément de connexion (8) est un ressort, un cylindre, un cliquet, un boulon d'encliquetage ou un moyen de serrage à clavette.

9. Dispositif selon l'une quelconque des revendications 3 à 8, **caractérisé en ce que** l'unité d'entraînement linéaire (1) comprend un moteur électrique, une transmission et un entraînement à vis.

10. Dispositif selon l'une quelconque des revendications 3 à 8, **caractérisé en ce que** l'unité d'entraînement linéaire (1) comprend un moteur électrique, une transmission avec un pignon et une crémaillère.

11. Dispositif selon l'une quelconque des revendications 3 à 8, **caractérisé en ce que** l'unité d'entraînement linéaire (1) est un entraînement linéaire électrique.
